# EUROPEAN PATENT APPLICATION

(11) **EP 2 818 657 A1**
(43) Date of publication of application: **31.12.2014**
(21) Application number: 14171584.7
(22) Date of filing: 06.06.2014
(51) Int. Cl.: F01N 5/02, F01N 13/16

(54) **Thermoelectric generator to engine exhaust manifold assembly**

(30) Priority: 24.06.2013 US 201313925199
(71) Applicant: Delphi Technologies, Inc., Troy MI 48007 (US)
(72) Inventor: Brandenburg, Scott, D., Kokomo, IN Indiana 46902 (US); Eltom, Khalid M., Kokomo, IN Indiana 46901 (US); Myers, Bruce A., Kokomo, IN Indiana 46901 (US); Eesley, Gary, L., Kokomo, IN Indiana 46902 (US); Moor, Bruce, Carmel, IN Indiana 46032 (US)
(74) Representative: Robert, Vincent

(57) **Abstract**

An assembly (10) for coupling thermally a thermoelectric generator (TEG (12)) to an exhaust manifold of an internal combustion engine. The assembly (10) includes a first heat exchanger (14) configured to guide exhaust gas (16) of an internal combustion engine past an opening (23) defined by the first heat exchanger (14), and a heat sink (50) configured to couple thermally the TEG (12) to the exhaust gas (16) and fluidicly seal the opening (23). The assembly (10) is configured so the heat sink (50) is directly exposed to the exhaust gas (16) so that heat is efficiently transferred from the exhaust gas (16) to the TEG (12).

## Description

### TECHNICAL FIELD OF INVENTION

This disclosure generally relates to equipping a vehicle with a thermoelectric generator (TEG), and more particularly relates to a way of coupling thermally a TEG to an opening in an exhaust manifold of an internal combustion engine.

### BACKGROUND OF INVENTION

It has been suggested that up to two-thirds of the fuel consumed to operate an internal combustion engine to, for example, propel an automobile is dissipated as waste heat into the atmosphere. It has also been suggested to equip an internal combustion engine with a thermoelectric generator (TEG) to convert some of this waste heat into electricity. TEG's are known devices that generate electricity when coupled thermally to objects that are at different temperatures. In general, the greater the temperature difference between the 'hot' side and the 'cold' side of a TEG, the greater the electrical power that can be produced. It has also been recognized that the greater the thermal conductivity (i.e. less thermal resistance) between an object and a TEG, the greater the electrical power that can be produced.

### SUMMARY OF THE INVENTION

In accordance with one embodiment, an assembly for coupling thermally a thermoelectric generator (TEG) to an exhaust manifold of an internal combustion engine is provided. The assembly includes a TEG, a first heat exchanger, and a heat sink. The TEG is configured to define a first thermal contact. The first heat exchanger is configured to guide exhaust gas of an internal combustion engine past an opening defined by the first heat exchanger. The heat sink is configured to couple thermally to the first thermal contact and fluidicly seal the opening, whereby heat from the exhaust gas is coupled to the TEG. The heat sink may be in direct contact with the exhaust gas. The heat sink may be formed of a ceramic material. The heat sink may be attached to the first heat exchanger by way of sintering. The heat sink may define fins configured for exposure to the exhaust gas. The heat sink may be formed of a stainless steel alloy. The heat sink may be attached to the first heat exchanger by way of welding. The heat sink may include a first dielectric layer overlaying a portion of the heat sink characterized as being in thermal contact with the first thermal contact. The first dielectric layer may be formed by firing a thick-film dielectric material onto the heat sink. The assembly may further include a first paste layer of silver (Ag) based sintering paste interposed between the first thermal contact of the TEG and the heat sink. The assembly may further comprise a second heat exchanger configured to couple thermally a second thermal contact surface of the TEG to coolant within the second heat exchanger.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a heat exchanger assembly in accordance with one embodiment; and
Fig. 2 is a sectional side view of the heat exchanger assembly of Fig. 1 in accordance with one embodiment.

### DETAILED DESCRIPTION

Waste heat of the exhaust from internal combustion engines can be converted into energy with the addition of a thermoelectric generator. Automobile exhaust reaches temperatures of about 800°C, and the temperature difference relative to ambient or engine coolant may be used to generate as much or more than one thousand Watts (1000W) of electrical power. This electrical power may, for example, be used to reduce the load on an automobile's alternator, thereby improving fuel economy. Described herein is a way to improve the thermal efficiency of a packaging configuration used to couple thermally a thermoelectric device to heat from automobile engine exhaust gas.

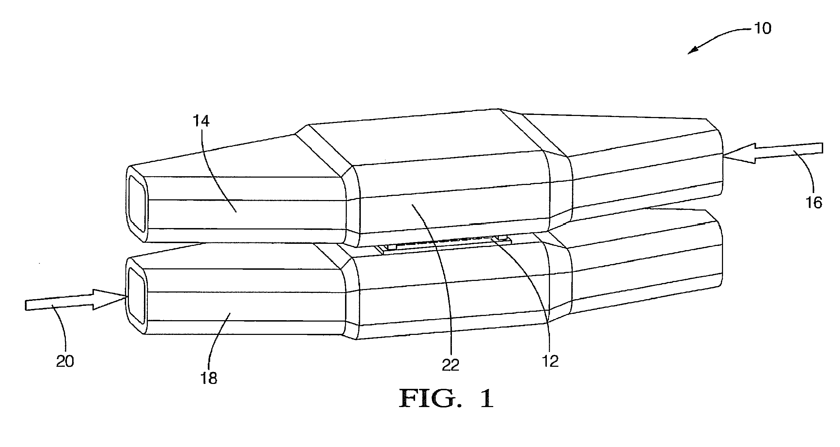

Fig. 1 illustrates a non-limiting example of an assembly 10 for coupling thermally a thermoelectric generator, hereafter the TEG 12, to an exhaust manifold, hereafter the first heat exchanger 14. Preferably, the first heat exchanger 14 is part of an exhaust system of an internal combustion engine (not shown) in a vehicle (not shown). Alternatively, the internal combustion engine may be part of a stationary power generation plant that provides mechanical energy and/or electrical energy to a location remote from a typical electrical power grid. As such, for this non-limiting example, the first heat exchanger 14 is configured to couple thermally the heat of the exhaust gas 16 that is within the first heat exchanger 14 to the TEG 12. Preferably, the first heat exchanger 14 is formed of stainless steel, such as #409 stainless steel that is readily from several suppliers.

The TEG 12 generally generates electrical power when a temperature difference is maintained across the TEG 12. By way of example and not limitation, the temperature difference relative to the first heat exchanger 14 may be provided a second heat exchanger 18. The second heat exchanger 18 may be part of a cooling system for an internal combustion engine. As such, for this non-limiting example, the second heat exchanger 18 is configured to couple thermally coolant 20 within the second heat exchanger 18 to the TEG 12. Alternatively, the second heat exchanger 18 may be a finned heat sink (not shown) having the fins exposed to ambient air, or coupled to a frame member of the vehicles chassis. Those skilled in the art will recognize that there are many alternatives for providing a 'cold' side to the TEG 12 to establish a temperature difference relative to the 'hot' side coupled to the first heat exchanger 14. As such, for this alternative embodiment, heat from the exhaust gas is communicated thermally through the TEG to a heat sink.

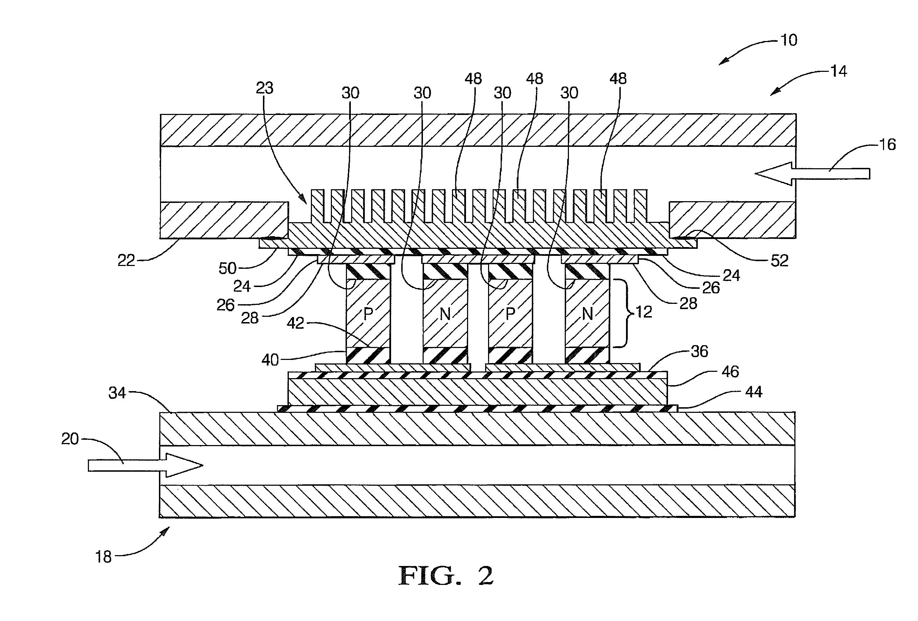

Fig. 2 further illustrates non-limiting details of the assembly 10. The TEG 12 is illustrated as having two p-type and two n-type elements, commonly known as Skutterudite junctions. It should be recognized that a TEG suitable to generate power levels in the kilowatt domain would have many more Skutterudite junctions, and those junction would likely be arranged in a two-dimensional array. The reduced number of junctions shown here and illustrated as a one-dimensional array is only for the purpose of simplifying the illustration.

Prior examples of the first heat exchanger 14 were configured to merely couple thermally heat from the exhaust gas 16 of an internal combustion engine (not shown) within the first heat exchanger 14 through the wall of the heat exchanger to an outer surface 22 of the heat exchanger. Described herein is an improvement that includes an opening 23 in the wall of the first heat exchanger 14 so that a heat sink 50 can make a more direct or intimate thermal contact with the exhaust gas 16.

Fig. 2 illustrates a non-limiting example of the assembly 10 for coupling thermally a thermoelectric generator (TEG 12) to the first heat exchanger 14 (i.e. - an exhaust manifold) of an internal combustion engine (not shown). The TEG 12 is configured to define a first thermal contact 30. The first heat exchanger 14 is configured to guide the exhaust gas 16 of an internal combustion engine (not shown) past an opening 23 defined by the first heat exchanger 14. The assembly includes a heat sink 50 configured to couple thermally to the first thermal contact 30 and fluidicly seal the opening 23. With the heat sink 50 in direct contact with the exhaust gas 16, heat from the exhaust gas 16 is more efficiently coupled to the TEG 12 than is the case where the heat must propagate through the wall of the first heat exchanger 14 to be coupled to the TEG 12.

In one embodiment, the heat sink 50 may be formed of a stainless steel alloy, such as #409 stainless steel that is readily from several suppliers. The heat sink 50 may includes a first dielectric layer 24 overlaying a portion of the heat sink 50 that is generally characterized as being in thermal contact with the first thermal contact 30. Using stainless steel for the heat sink 50 may require applying a first dielectric layer 24 to overlay a portion of the heat sink 50 to electrically isolate the heat sink 50 from the TEG 12 of the first heat exchanger 14. Preferably, the first dielectric layer 24 is formed by firing a thick-film dielectric material such as DuPont 3500N Thick Film Dielectric onto the stainless steel forming the heat sink 50. The first dielectric layer may be formed by firing a thick-film dielectric material onto the heat sink

If the heat sink is formed of a stainless steel allow, the heat sink 50 may be attached to the first heat exchanger 14 by way of welding, brazing, or other known techniques for joining metals, and thereby form a fluidic seal 52 between the heat sink 50 and the first heat exchanger 14.

The heat sink 50 may be optionally configured to include or define fins 48 configured for exposure to the exhaust gas. The fins 48 or other similar surface-area increasing features may be added to improve heat transfer from the exhaust gas 16 to the TEG 12.

Prior examples of coupling thermally a thermoelectric generator to an exhaust manifold have used an alumina (Al2O3) heat sink for a dielectric barrier between the thermoelectric generator and a metallic exhaust manifold. Alumina heat sinks need to be at least seven-hundred-fifty micrometers (750um or 0.75 mm) thick to be strong enough to easily process and use in such an application. Alumina has a thermal conductivity of about thirty Watts per meter-Kelvin (30 W/ (m•°K)) and so a 0.75mm thick alumina heat sink can be characterized has having a thermal performance factor of 30 / 0.75 = 40.

In contrast, thick-film dielectric material such as DuPont 3500N can be applied to have a fired thickness of about thirty-seven micrometers (38um or 0.037mm). DuPont 3500N has a thermal conductivity of about two Watts per meter-Kelvin (2 W/ (m•°K)), and so the first dielectric layer 24 may be characterized has having a thermal performance factor of 2 / 0.038 = 53, about a 33% improvement in thermal performance when compared to the alumina heat sink example above. In other words, using the dielectric layer for the first dielectric layer instead of the previously proposed alumina heat sink decreases the heat energy lost as heat passes from the first heat exchanger 14 to the TEG 12 by 25%.

Continuing to refer to Fig. 2, the assembly 10 may include first conductor layer 26 overlaying the first dielectric layer 24. In general, the first conductor layer 26 is arranged to interconnect the various elements that make up the TEG, and provide a contact pad 28 for making electrical connections (not shown) to the assembly 10. A suitable material for the first conductor layer is thick film silver ink available from DuPont and other suppliers. Various ways to make electrical connections to the contact pad 28 will be recognized by those skilled in the art. For example, a metallic wire, foil, or ribbon (none shown) may be soldered or brazed to the contact pad 28 so electrical energy generated by the TEG 12 can be conveyed to other locations outside of the assembly.

The first conductor layer 26 is preferably formed by firing a conductive thick-film onto the first dielectric layer 24. The first conductor layer 26 may be co-fired with the first dielectric layer 24 as part of a single firing operation, or the first conductor layer 26 may be fired onto the first dielectric layer 24 subsequent to firing the first dielectric layer as part of a sequential firing operation.

The TEG 12 is generally configured to define a first thermal contact 30 suitable to be coupled electrically to the first conductor layer 26. Electrical coupling of the first thermal contact 30 to the first conductor layer 26 is preferably provided by a first paste layer 32 formed of silver (Ag) based sintering paste interposed between the first conductor layer 26 and the first thermal contact 30 of the TEG 12. A suitable material for the first paste layer 32 is LOCTITE ABLESTIK SSP-2000 silver sintering paste, preferably applied using known screen printing method to a thickness of one-hundred micrometers (100 um) which would have a thickness of fifty micrometers (50 um) after drying. Accordingly, the first thermal contact 30 preferably has a surface layer suitable for silver sintering such as silver. In general, the first thermal contact 30 is sintered to the first conductor layer 26 by the first paste layer 32 when the assembly 10 is suitably arranged and suitably heated. Suitably arranging the assembly 10 may include arranging the various layers as illustrated in Figs. 1 and 2, to form stack, and optionally applying a force to the stack. Suitably heating the assembly may include heating the assembly to a temperature of three-hundred degrees Celsius (300°C) for five minutes (5 min.) and then cooling the assembly 10 to room temperature.

Preferably, the assembly 10 is stress balanced about the TEG 12, and so the various layers and interfaces described above may be mirror imaged on the other side of the TEG 12 opposite the first thermal contact 30. Accordingly, an outer surface 34 of the second heat exchanger 18 is preferably formed of stainless steel, preferably the same alloy used to form the outer surface 22 of the first heat exchanger 14. The assembly 10 may also include a second dielectric layer 36 overlaying a portion of the outer surface 34 of the second heat exchanger 18. Like the first dielectric layer 24, the second dielectric layer 36 is preferably formed by firing a thick-film dielectric material (e.g. DuPont 3500N) onto the stainless steel of the second heat exchanger 18.

Alternatively, the heat sink 50 may be formed of a ceramic material, such as Aluminum-Nitride (ALN or AlN). If the heat sink is formed of a ceramic material, it may be preferable for the first heat exchanger 14 to be formed of Alloy #42 so that the thermal coefficients of expansion (CTE) of the heat sink 50 and the first heat exchanger 14 are relatively matched.

If the heat sink 50 is formed of a ceramic material, it may be preferable for the heat sink 50 to be attached to the first heat exchanger 14 by way of sintering using, for example, LOCTITE ABLESTIK SSP-2000 silver sintering paste to form the fluidic seal 52. It is noted that if the ceramic material used to form the heat sink 50 is not electrically conductive, the assembly 10 may not require the first dielectric layer 24 since the first conductor layer 26 may be fired directly onto the heat sink 50. Similar to the embodiment having a stainless steel heat sink, the ceramic heat sink may include or define fins 48 configured for exposure to the exhaust gas.

The assembly 10 may also include a second conductor layer 38 overlaying the second dielectric layer 36. The second conductor layer 38 is preferably formed the same material used for the first conductor layer 26 and processed in the same manner as the first conductor layer 26 by firing the conductive thick-film onto the second dielectric layer 36. Similarly, the assembly 10 may include a second paste layer 40 of silver (Ag) based sintering paste interposed between the second conductor layer and a second contact 42 of the TEG, wherein the second contact 42 is sintered to the second conductor layer 38 when the assembly is suitably arranged and suitably heated. As such, the assembly 10 described herein is configured so heat from the exhaust gas 16 is communicated thermally through the TEG 12 to the coolant 20. Alternatively, if the second heat exchanger 18 is a heat sink as suggested above, heat from the exhaust gas 16 is communicated thermally through the TEG 12 to the heat sink (not shown).

Fig. 2 further illustrates a non-limiting example of the assembly 10 that adds a sliding layer and an intermediate heat sink 46 to the thermal path between the outer surface 34 of the second heat exchanger 18, and the second dielectric layer 36. The sliding layer 44 allows relative motion between the TEG 12 and the second heat exchanger 18 so unequal expansion of the first heat exchanger 14 and the second heat exchanger 18 does not cause stress that could damage the TEG 12. In this non-limiting example, the intermediate heat sink 46 may be attached to the TEG 12 using the techniques described above, and then the sliding layer 44 may be formed by applying thermal grease or other suitable material to the outer surface 34.

Accordingly, an assembly 10 for coupling thermally a thermoelectric generator (TEG) to an exhaust manifold (e.g. the first heat exchanger 14) of an internal combustion engine is provided. By providing the opening 23, the heat sink 50 can be in direct contact with the exhaust gas 16 and so provide a more efficient transfer of heat to the TEG 12. In other words, the assembly 10 is configured so the heat sink 50 is directly exposed to the exhaust gas 16 so that heat is efficiently transferred from the exhaust gas to the TEG.

## Claims

1. An assembly (10) for coupling thermally a thermoelectric generator (TEG (12)) to an exhaust manifold of an internal combustion engine, said assembly (10) comprising:
a TEG (12) configured to define a first thermal contact (30);
a first heat exchanger (14) configured to guide exhaust gas (16) of an internal combustion engine past an opening (23) defined by the first heat exchanger (14); and
a heat sink (50) configured to couple thermally to the first thermal contact (30) and fluidicly seal the opening (23), whereby heat from the exhaust gas (16) is coupled to the TEG (12).

2. Assembly (10) in accordance with claim 1, wherein the heat sink (50) is in direct contact with the exhaust gas (16).

3. Assembly (10) according to any one of the preceding claims, wherein the heat sink (50) is formed of a ceramic material.

4. Assembly (10) in accordance with claim 3, wherein the heat sink (50) is attached to the first heat exchanger (14) by way of sintering.

5. Assembly (10) according to any one of the preceding claims, wherein the heat sink (50) defines fins (48) configured for exposure to the exhaust gas (16).

6. Assembly (10) according to any one of the preceding claims, wherein the heat sink (50) is formed of a stainless steel alloy.

7. Assembly (10) in accordance with claim 6, wherein the heat sink (50) is attached to the first heat exchanger (14) by way of welding.

8. Assembly (10) according to any one of the preceding claims, wherein the heat sink (50) includes a first dielectric layer (24) overlaying a portion of the heat sink (50) characterized as being in thermal contact with the first thermal contact (30).

9. Assembly (10) in accordance with claim 9, wherein the first dielectric layer (24) is formed by firing a thick-film dielectric material onto the heat sink (50).

10. Assembly (10) according to any one of the preceding claims, wherein the assembly (10) includes a first paste layer (32) of silver (Ag) based sintering paste interposed between the first thermal contact (30) of the TEG (12) and the heat sink (50).

11. Assembly (10) according to any one of the preceding claims, wherein assembly (10) further comprises
a second heat exchanger (18) configured to couple thermally a second thermal contact surface of the TEG (12) to coolant (20) within the second heat exchanger (18).
